# EUROPEAN PATENT SPECIFICATION

(11) **EP 3 889 341 B1**
(45) Date of publication and mention of the grant of the patent: **27.11.2024**
(21) Application number: 21165209.4
(22) Date of filing: 26.03.2021
(51) Int. Cl.: D06F 58/24, D06F 58/45, D06F 58/20, D06F 103/50, D06F 103/54, D06F 105/36

(54) **LAUNDRY TREATMENT APPARATUS AND METHOD FOR OPERATING THE SAME**
WÄSCHEBEHANDLUNGSVORRICHTUNG UND VERFAHREN ZUM BETRIEB DAVON
APPAREIL DE TRAITEMENT DU LINGE ET PROCÉDÉ DE COMMANDE CORRESPONDANT

(30) Priority: 30.03.2020 KR 20200037968
(43) Date of publication of application: 06.10.2021
(73) Proprietor: LG Electronics Inc., Yeongdeungpo-gu Seoul 07336 (KR)
(72) Inventor: LEE, Kwangjo, 08592 Seoul (KR); JEONG, Gayeong, 08592 Seoul (KR); JOO, Hyojin, 08592 Seoul (KR); CHOI, Jangan, 08592 Seoul (KR)
(74) Representative: Vossius & Partner Patentanwälte Rechtsanwälte mbB

(56) References cited:
- CN-U- 206 956 390
- CN-U- 210 002 140
- US-A1- 2012 159 972

## Description

### BACKGROUND

### Field

The present invention relates to a laundry treatment apparatus having a novel structure with improved sterilization performance to prevent contamination of residual water.

### Discussion of the Related Art

In general, the laundry treatment apparatus includes a washing machine, a laundry dryer, a laundry washing and drying apparatus, a clothing manager, etc. and is disposed in a home and a laundry shop, and performs a function for all of treatments such as washing, drying, or removing wrinkles for laundry or various bedding.

Among these laundry treatment apparatuses, the laundry dryer has a heat pump system and is configured to supply hot-air to a treatment target such as the laundry or bedding put into a tub or a drum via operation of this heat pump system to evaporate moisture contained in the treatment target to dry the treatment target.

Further, the laundry dryer may be classified into a discharge-type dryer and a condensation-type dryer according to a treatment scheme of hot and humid air that exits the drum after drying the treatment target.

In this connection, the discharge-type dryer is configured to directly discharge the high-temperature and humid air produced during the drying operation to an outside. The condensation-type dryer is configured to condense moisture contained in the air through heat exchange while circulating the hot and humid air produced during the drying operation without discharging the air to the outside.

In particular, the condensation-type dryer has the heat pump system including a compressor, a condenser, an expander and an evaporator. The moisture is removed from the air while the air is passing through the evaporator of the heat pump system and then the air is heated while the air is passing through the condenser.

The condensation-type dryer is disclosed in KR Patent Application Publication No. 10-2010-0090087, KR Patent Application Publication No. 10-2013-0127816, KR Patent Application Publication No. 10-2016-0087183, and KR Patent Application Publication No. 10-2016-0149852. CN 210 002 140 U relates to a condensed water recovery device for clothes care equipment. The condensed water recovery device is arranged in a cabinet body for collecting condensed water in drying to recycle the condensed water. The condensed water recovery device includes a water collecting member to collect the condensed water, a sterilizing member using ultraviolet rays to sterilize the condensed water in the water collecting member, and a water pump to store the condensed water to a water storage device. However, it fails to teach that the sterilizing member operates independently of a specific process, such as a drying process. Besides, it fails to teach at which location the water pump should be in order to prevent the condensed water in the condensed water recovery device from being stagnant.

In one example, the condensation-type dryer as described above according to the prior art produces a large amount of condensed water via heat-exchanging while air passes through the evaporator.

This condensed water flows down to a bottom of a circulation channel and then collects in a condensed water collector where condensed water is collected and stored. The condensed water collected in this way is pumped by a water pump installed in the condensed water collector and thus is stored in a water discharge container.

However, although the condensed water existing in an area where the water pump is located must be completely discharged using the water pump, it is inevitable not to completely discharge the condensed water due to a structural limitation of the conventional water pump.

Accordingly, a certain amount of condensed water always remains in the condensed water collector. Thus, contaminations due to such residual water inevitably occurs.

In particular, the condensed water collector where condensed water remains is blocked from an external environment so that the condensed water may be pumped therein easily. Thus, when there is residual water in an inner space of the collector, there is a concern that the residual water does not evaporate rapidly and remains for a long time, so that propagation of bacteria due to contamination of the residual water may occur.

For this reason, high temperature heat of approximately 70°C may be supplied thereto to kill the bacteria contained in the condensed water, or the germs may be killed using drugs.

However, the scheme of killing the bacteria with the high temperature heat is inevitable to cause user dissatisfaction because energy consumption is large. Further, the scheme of killing the bacteria with the drug may leave the drug which in turn remains on the laundry.

### [Prior technical literature]

### [Patent Literature]

Patent Document 1: Korean Patent Application Publication No. 10-2010-0090087
Patent Document 2: Korean Patent Application Publication No. 10-2016-0087183
Patent Document 3: Korean Patent Application Publication No. 10-2017-0016754
Patent Document 4: Korean Patent Application Publication No. 10-2016-0149852

### SUMMARY

The invention is defined by independent claim 1. Further embodiments of the invention are defined by the dependent claims. The present disclosure has been completed to solve various problems according to the prior art as described above. Thus, a purpose of the present invention is to provide a laundry treatment apparatus having a sterilization function having a novel structure that enables sterilization of the condensed water stored in the condensed water collector to prevent contamination of the condensed water.

Further, another purpose of the present invention is a laundry treatment apparatus that has a sterilization function with a novel structure which allows condensed water to be sterilized in a process of introducing the condensed water into the condensed water collector to prevent condensed water contamination in the condensed water collector as much as possible.

Further, still another purpose of the present invention is to provide a laundry treatment apparatus having a sterilization function having a novel structure capable of inhibiting bacterial growth in the condensed water remaining in the condensed water collector.

The laundry treatment apparatus according to the present invention to achieve the above purpose has a sterilization module which is configured to sterilize condensed water in the condensed water collector where the condensed water is collected and stored, thereby preventing bacterial propagation in or contamination of the condensed water in the condensed water collector.

Further, in the laundry treatment apparatus according to the present invention, the sterilization module is installed on a pump cover of a discharge pump assembly, such that the sterilization module and the discharge pump assembly constitute a single module.

Further, in the laundry treatment apparatus according to the present invention, a light-transmitting hole is defined in the pump cover, such that the sterilization module is configured to irradiate sterilization light into the light-transmitting hole, thereby accurately irradiating the sterilization light only to a target area.

Further, in the laundry treatment apparatus according to the present invention, the sterilization module is installed an outer face of a top of the pump cover. This allows maintenance including replacing only the sterilization module without removing the discharge pump assembly.

Further, in the laundry treatment apparatus according to the present invention, the sterilization light is irradiated to an area where the condensed water flows into the condensed water collector. This enables sterilization of an entirety of the condensed water stored in the condensed water collector.

Further, in the laundry treatment apparatus according to the present invention, the sterilization light is short-wavelength ultraviolet-ray. This enables sterilization of bacteria included in the flow condensed water.

Further, in the laundry treatment apparatus according to the present invention, the sterilization module includes a circuit board that irradiates short-wavelength ultraviolet-ray, a casing on which the circuit board is installed, and a sealing member that protects the circuit board from condensed water, such that the sterilization module is separated therefrom or assembled therewith independently.

Further, the laundry treatment apparatus according to the present invention has a transmissive window in the sealing member and the short-wavelength ultraviolet-ray irradiates through this transmissive window, thereby irradiating the short-wavelength ultraviolet-ray while blocking inflow of the condensed water.

Further, in the laundry treatment apparatus according to the present invention, a bottom face of the sealing member covers the light-transmitting hole and is closely attached thereto, thereby preventing inflow of the condensed water as much as possible.

Further, in the laundry treatment apparatus according to the present invention, the transmissive window is fixedly inserted in a recess of the sealing member. This enables stable mounting of the transmissive window therein.

Further, in the laundry treatment apparatus according to the present invention, a depth of the recess is larger than a thickness of the transmissive window. This enables stable mounting of the transmissive window therein.

Further, in the laundry treatment apparatus according to the present invention, the sealing member is formed in a disk shape. This increases a contact area thereof with the pump cover to improve airtightness.

Further, in the laundry treatment apparatus according to the present invention, at least one circular concave-convex pattern is formed on a bottom face of the sealing member, thereby further improving the airtightness.

Further, in the laundry treatment apparatus according to the present invention, the sealing member is made of a silicon material. Thus, the sealing member is in tight contact with the pump cover to allow the airtightness to be maintained.

Further, in the laundry treatment apparatus according to the present invention, the casing constituting the sterilization module is constructed to open the inner space such that an operator may perform maintenance and management of the circuit board.

Further, in the laundry treatment apparatus according to the present invention, the sterilization module and the pump cover are fastened to each other with screws or bolts, such that they are easily separated or combined from or with each other.

Further, in the laundry treatment apparatus according to the present invention, a light emitting diode (LED) continues to emit light during a sterilization operation, thereby improving the sterilization effect.

Further, in the laundry treatment apparatus according to the present invention, the discharge pump assembly is controlled to be activated and deactivated in a repeated manner during the sterilization operation, thereby improving the sterilization effect.

Further, in the laundry treatment apparatus according to the present invention, operations of only the LED and the discharge pump assembly may be controlled to enable the sterilization operation.

Further, in the laundry treatment apparatus according to the present invention, the sterilization light is irradiated toward the condensed water being collected into a collection pipe, thereby improving the sterilization effect of the condensed water in the condensed water collector.

Further, in the laundry treatment apparatus according to the present invention, the sterilization light irradiated from the sterilization module is short-wavelength ultraviolet-ray, such that continuous irradiating may kill the bacteria.

As described above, in the laundry treatment apparatus according to the present invention, the sterilization of the condensed water stored in the condensed water collector may be realized via additional provision of the sterilization module to prevent the contamination of the condensed water.

Further, the laundry treatment apparatus according to the present invention is configured to sterilize the condensed water in the process of introducing the condensed water into the condensed water collector. Thus, the contamination of the condensed water in the condensed water collector may be suppressed, or delayed as much as possible.

Further, in the laundry treatment apparatus according to the present invention, the sterilization operation may be performed even when the drying operation is terminated, thereby achieving an effect of being able to suppress the bacterial growth of the condensed water remaining in the condensed water collector.

Further, in the laundry treatment apparatus according to the present invention, the sterilization module is installed interchangeably on the outer face of the pump cover, thereby allowing easy assembly and disassembly thereof for easy maintenance.

Further, the laundry treatment apparatus according to the invention is configured so that a portion where the circuit board constituting the sterilization module is installed may be constructed to maintain airtightness from the inner space in the condensed water collector, and so that the airtightness is stably and fully maintained, thereby preventing damage to the circuit board due to moisture penetration.

### BRIEF DESCRIPTION OF DRAWINGS

FIG. 1 is a perspective view showing an internal structure of a laundry treatment apparatus according to an embodiment of the present disclosure.
FIG. 2 is a block diagram schematically showing a flow structure for a drying operation and a washing operation by a laundry treatment apparatus according to an embodiment of the present disclosure.
FIG. 3 is a side view schematically showing a structure for a drying operation by a laundry treatment apparatus according to an embodiment of the present disclosure.
FIG. 4 is a perspective view showing a heat pump system of a laundry treatment apparatus according to an embodiment of the present disclosure.
FIG. 5 is an enlarged view of a portion "A" in FIG. 4
FIG. 6 is an exploded perspective view showing a heat pump system of a laundry treatment apparatus according to an embodiment of the present disclosure.
FIG. 7 is a plan view showing a base frame of a laundry treatment apparatus according to an embodiment of the present disclosure.
FIG. 8 is an enlarged view of a portion "B" of FIG. 7.
FIG. 9 is a perspective view showing main components of a laundry treatment apparatus according to the present disclosure for illustrating a state where a discharge pump assembly is installed in a condensed water collector.
FIG. 10 is a perspective view showing main components of a laundry treatment apparatus according to the present disclosure for illustrating a state in which the discharge pump assembly is withdrawn out of the condensed water collector.
FIG. 11 is a cross-sectional view of I-I line in FIG. 4.
FIG. 12 is a cross-sectional view showing an internal structure of a portion in which a circulation channel of a laundry treatment apparatus according to an embodiment of the present disclosure is located.
FIG. 13 is an enlarged cross-sectional view showing a structure of a portion where the discharge pump assembly is installed among portions of FIG. 12.
FIG. 14 is an enlarged view of a portion "C" in FIG. 13.
FIG. 15 is an exploded perspective view showing a structure of a sterilization module of a laundry treatment apparatus according to an embodiment of the present disclosure.
FIG. 16 is a bottom perspective view to illustrate a structure of the sterilization module of the laundry treatment apparatus according to an embodiment of the present disclosure.
FIG. 17 is a perspective view of a state in which main components are partially cut away to illustrate an installation state of the sterilization module of the laundry treatment apparatus according to an embodiment of the present disclosure.
FIG. 18 is a cross-sectional view showing a structure of the sterilization module of a laundry treatment apparatus according to an embodiment of the present disclosure.
FIG. 19 is a plan view showing a state in which condensed water flows to the condensed water collector during a drying operation of the laundry treatment apparatus according to the present disclosure.
FIG. 20 is a cross-sectional view showing a state in which the condensed water flows to the condensed water collector and an operation state of the sterilization module during the drying operation of the laundry treatment apparatus according to the embodiment of the present disclosure.

### DETAILED DESCRIPTIONS

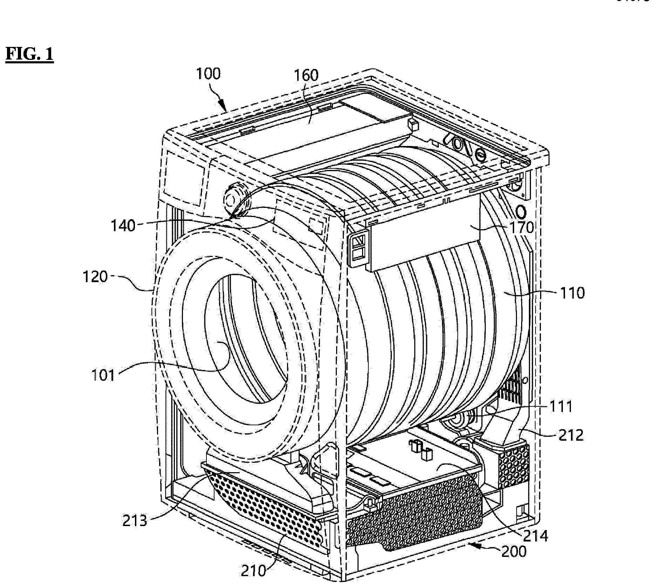

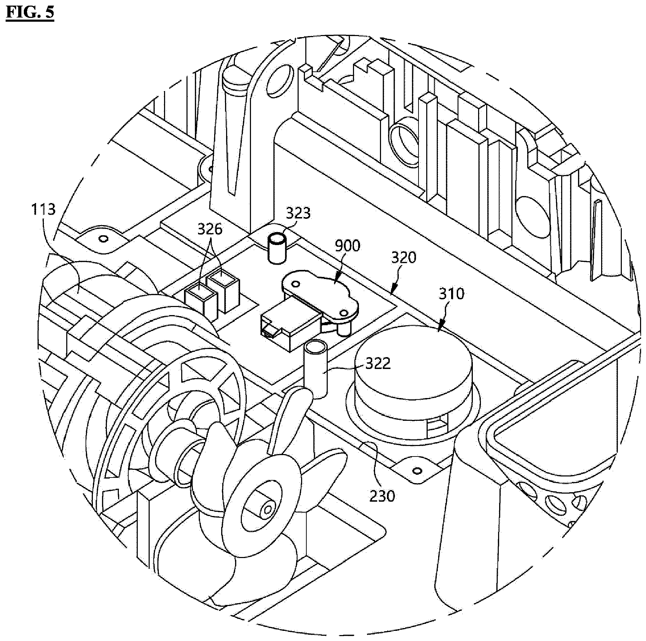

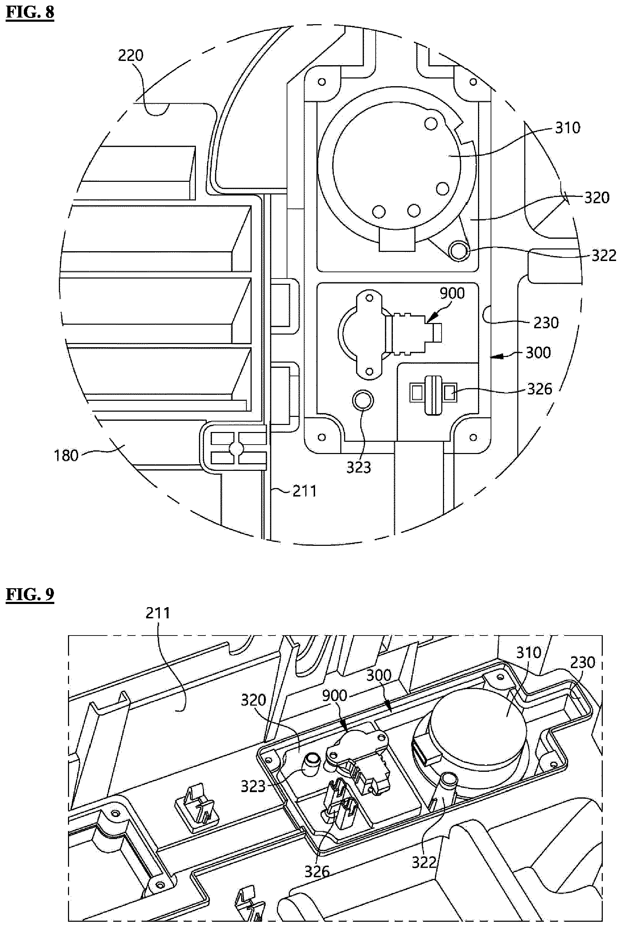

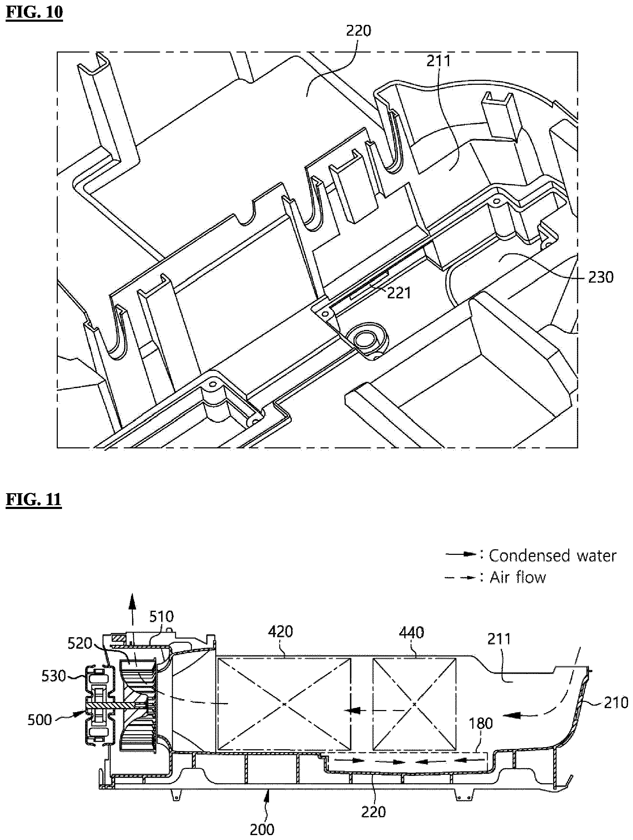

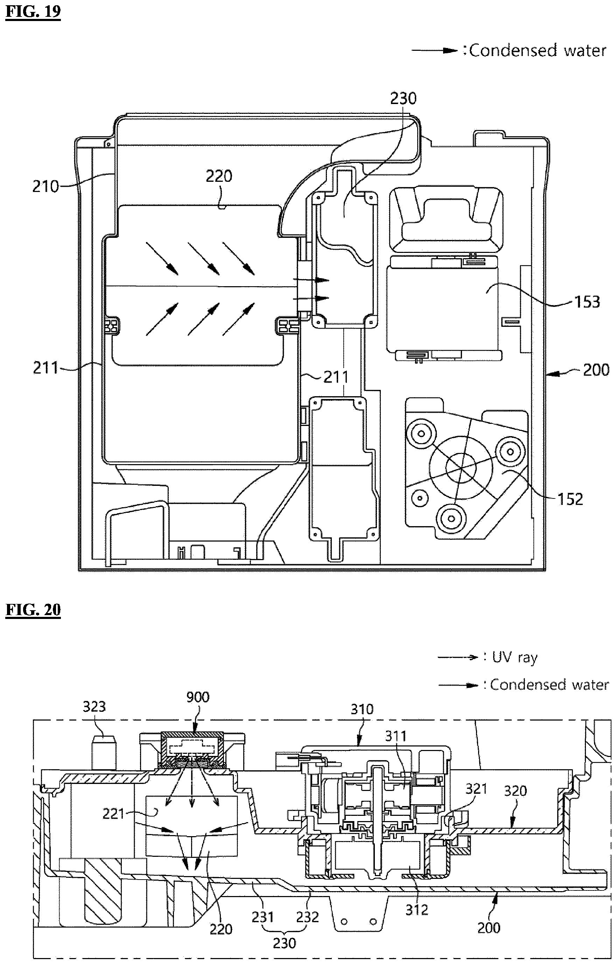

Hereinafter, preferred embodiments of a laundry treatment apparatus according to the present disclosure and a method for operating the same (not forming part of the claimed invention) will be illustrated with reference to the accompanying FIGS. 1 to 20.

For the illustration of the embodiments, an example in which the laundry treatment apparatus according to the present disclosure is a laundry dryer that supplies dry hot-air to dry laundry will be described.

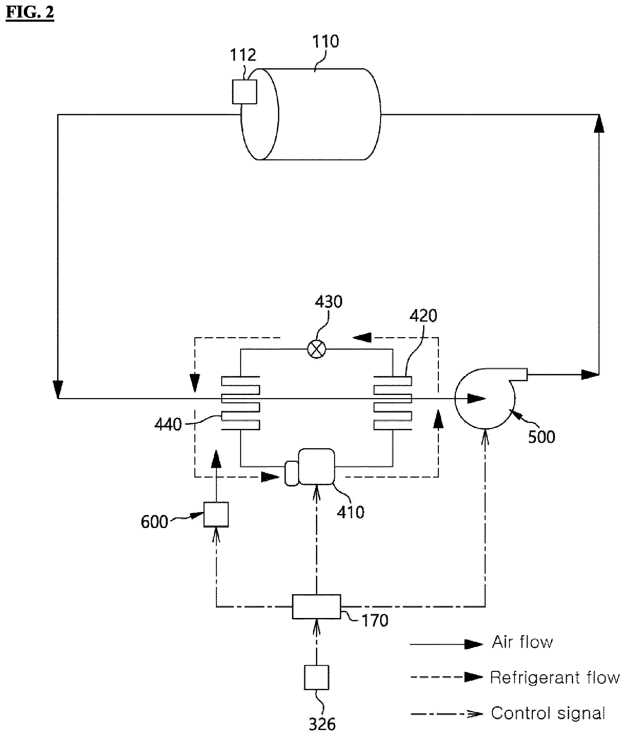

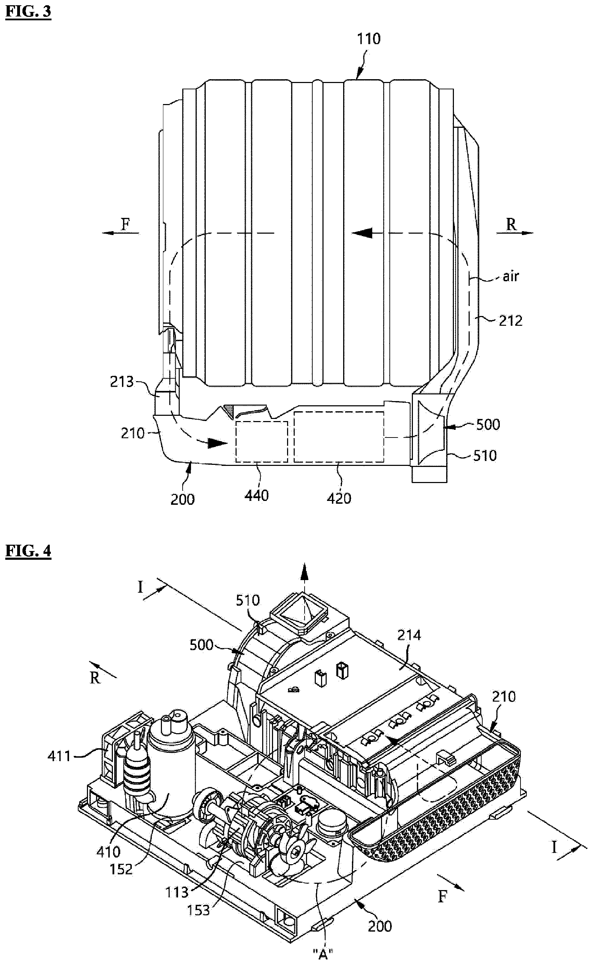

FIGS. 1 to 7 show an installation structure of each of components of the laundry treatment apparatus according to the embodiment of the present disclosure. In this connection, FIG. 1 is a perspective view showing an internal structure of the laundry treatment apparatus according to an embodiment of the present disclosure. FIG. 2 is a block diagram schematically showing a structure for a drying operation and a washing operation by the laundry treatment apparatus according to an embodiment of the present disclosure. FIG. 3 is a side view schematically showing a structure for a drying operation by the laundry treatment apparatus according to an embodiment of the present disclosure.

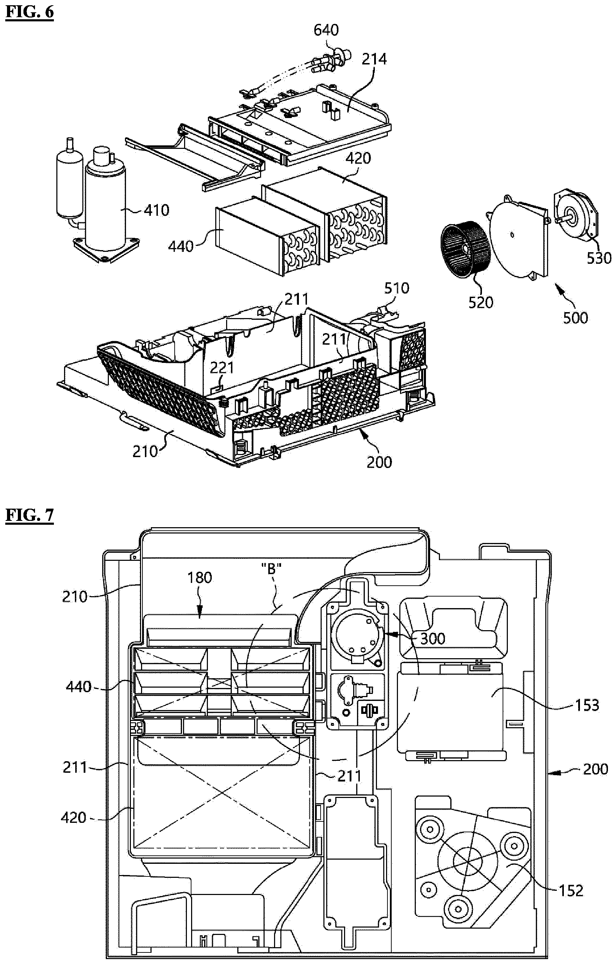

Further, FIG. 4 is a perspective view showing to illustrate a heat pump system of the laundry treatment apparatus according to an embodiment of the present disclosure. FIG. 6 is an exploded perspective view showing a heat pump system of a laundry treatment apparatus according to an embodiment of the present disclosure. FIG. 7 is a plan view showing a base frame of a laundry treatment apparatus according to an embodiment of the present disclosure.

As shown in these drawings, the laundry treatment apparatus according to the invention is configured to include a sterilization module 900 that sterilizes the condensed water in a condensed water collector 230.

In other words, the condensed water flowing into the condensed water collector 230 is sterilized via additional provision of the sterilization module 900, so that contamination of the condensed water may be prevented even when the condensed water remains in the condensed water collector 230.

The laundry treatment apparatus having the above feature is largely composed of a cabinet 100, a discharge pump assembly 300, a heat pump system, a circulation fan assembly 500, and the sterilization module 900. A structure of each of the components of the laundry treatment apparatus will be illustrated in more detail with reference to the drawings.

First, the cabinet 100 is illustrated with referring to the attached FIG. 1.

The cabinet 100 defines an appearance of the laundry treatment apparatus.

This cabinet 100 may be embodied as a hollow body. Inside the cabinet 100, a drum 110 which receives a drying target, that is, laundry may be rotatably installed.

In this connection, a front face of the cabinet 100 has a drying target inlet 101 through which the drying target is input into the drum 110. The drying target inlet 101 may be opened and closed by a door 120.

Further, a water discharge container 160 is disposed in the cabinet 100. The water discharge container 160 temporarily stores therein condensed water to be drained.

Further, the base frame 200 is disposed on a bottom of the cabinet 100. This base frame 200 may form a floor within the cabinet 100.

In another example, although not shown, a separate bottom plate may be disposed to close an open bottom face of the cabinet 100. The base frame 200 may be mounted on the bottom plate and fixed thereto.

The discharge pump assembly 300, the heat pump system, the circulation fan assembly 500, and the circulation channel 210 which will be described later may be installed or formed on a top face of the base frame 200 (a bottom face of the cabinet) as shown in the attached FIGS. 4 to 7.

In addition, a plurality of recesses may be defined in the top face of the base frame 200. The recesses may include a recess 152 for receiving a compressor 410, a recess 153 for receiving a drum driving motor 113, and a recess for receiving the discharge pump assembly 300. This is as shown in the attached FIGS. 4 and 7.

In particular, the recesses for receiving the discharge pump assembly 300 may act as the condensed water collector 230 for storage of condensed water.

In this connection, the condensed water stored in the condensed water collector 230 may include condensed water that is condensed via heat exchange between the water produced during the drying operation and an evaporator.

In one example, the circulation channel 210 may be formed on one side of the face top of the base frame 200.

This circulation channel 210 is constructed so that the evaporator 440 and the condenser 420 of the heat pump system are sequentially installed therein. In addition, the circulation channel 210 may be formed in a duct-like structure (see attached FIG. 6) having left and right walls 211 that guide air flow so that the air passes through the evaporator 440 and the condenser 420 in sequence. In this connection, a top face of the circulation channel 210 may be formed to be open, while a bottom face of the circulation channel 210 may define the top face of the base frame 200.

In another example, a shape of the circulation channel 210 may be formed in various structures such as a cylindrical duct as well as a box-shaped duct having an open top face in consideration of a shape of a surrounding structure or air flow characteristics.

Moreover, an inlet duct 212 that guides supplying dry air into the drum 110 may be connected to an air outflow side as a rear side of the circulation channel 210. An outlet duct 213 that guides discharge flow of air discharged from the drum 110 may be connected to an air inlet side as a front side of the circulation channel 210. This is as shown in FIG. 1 as attached.

In addition, the open top face of the circulation channel 210 may be closed by a base cover 214 (see attached FIGS. 4 and 6). That is, the circulation channel 210 may have an inner space blocked from the external environment with the base cover 214 as described above.

Further, a cover seated groove 220 is defined in the bottom face in the circulation channel 210. In this cover seated groove 220, a water cover 180 on which the evaporator 440 and the condenser 420 are fixedly mounted may be seated. In this connection, a side wall (a rear side wall) of the cover seated groove 220 may have a through-hole 221 (see attached FIG. 6, FIG. 10, and FIG. 12) defined therein that communicates with a front space of the condensed water collector 230.

That is, the condensed water dropped to a floor in the circulation channel 220 flows down into the cover seated groove 220 and then flows backward along a bottom face of the cover seated groove 220, and then passes through the through-hole 221 and then is stored in the condensed water collector 230. In this connection, a bottom face of the cover seated groove 220 may be formed inclined toward a portion where the condensed water collector 230 is located, so that the condensed water flowing down to the floor in the cover seated groove 220 is smoothly transferred to the condensed water collector 230 along the inclined bottom face.

In addition, residual water stored in the condensed water collector 230 may be drained into the water discharge container 160 after all operations have been terminated.

In one example, a controller 170 may be installed inside the cabinet 100.

The controller 170 may be configured to control the operation of the laundry treatment apparatus.

The controller 170 may be configured to control the operation of the laundry treatment apparatus based on a user's manipulation applied through an input interface 140 of the cabinet 100.

Further, the controller 170 may be programmed to control operations of the circulation fan assembly 500 and the compressor 410 to performs a drying operation on the treatment target, and to control an operation of the discharge pump 310 based on a water-level identified by a water-level sensor 326 to be described later to perform a water discharging operation in which the residual water stored in the condensed water collector 230 is pumped and drained out. In this connection, the water-level sensor 326 is installed in the discharge pump assembly 300 and configured to detect the condensed water-level in the condensed water collector 230.

Next, the drum 110 is illustrated with referring to FIG. 1 and FIG. 3 as attached.

The drum 110 may be embodied as a cylindrical body with front and rear openings. The front opening of the drum 110 may communicate with the drying target inlet 101 of the cabinet 100. In this connection, the drum may rotate while being supported on a roller 111 in the cabinet 100.

Further, the drum 110 may be constructed so that hot dry hot-air may flow into the drum. In this connection, the drying hot-air may be introduced into an inner space of the drum through the rear opening of the drum 110 and then discharged to the outside of the drum 110 through the front opening of the drum 110.

Further, the front opening and the rear opening of the drum 110 may be connected to the circulation channel 210 which extends through the condenser 420 and the evaporator 440 of the heat pump system to be described later.

That is, the drying target in the drum 110 may be dried with high-temperature dry air supplied from the heat pump system through the circulation channel 210. The humid air that contains moisture as the drying target is dried is supplied to the heat pump system. This circulation is repeated. This is as shown in FIG. 2 as attached.

In one example, a dryness sensor 112 (refer to attached FIG. 2) may be further disposed inside the drum 110.

The dryness sensor 112 may be configured to identify dryness of the drying target, and may be composed of two electrodes. In this connection, the two electrodes may be exposed toward the inside of the drum 110 while being spaced apart from each other. The dryness sensor 112 may be installed on the door 120, for example, or may be installed on the cabinet 100 adjacent to the door.

The dryness sensor (the two electrodes) 112 may determine the dryness of the drying target based on an electrode value. In this connection, a current value varies according to the drying target's condition, for example, a wetness of the drying target when the drying target comes into contact with the electrodes. Then, the current value is converted into the electrode value. In other words, when considering that the drying target acts as a resistance to the two electrodes of the dryness sensor 112, the current flowing through a circuit varies because the resistance value varies according to a moisture content of the drying target. A fluctuation value of this variable current is converted into a predetermined electrode value. Thus, the dryness may be determined based on this electrode value.

In this connection, the predefined electrode value may be an arbitrary value converted into a numerical range in which the laundry treatment apparatus is easily controlled.

Next, the discharge pump assembly 300 is illustrated with reference to FIGS. 7 to 13.

The discharge pump assembly 300 is configured to pump the condensed water stored in the condensed water collector 230. As shown in the attached FIGS. 7 to 9, the discharge pump assembly 300 may be accommodated and mounted in the condensed water collector 230.

The discharge pump assembly 300 may include a discharge pump 310 and a pump cover 320.

In this connection, the discharge pump 310 is configured to pump the condensed water stored in the condensed water collector 230.

This discharge pump 310 is not shown in detail. The discharge pump 310 may be configured to pump the condensed water stored in the condensed water collector 230 via rotation of an impeller thereof when a discharge motor thereof is activated.

Moreover, the pump cover 320 is constructed so that the inside of the condensed water collector 230 in which the discharge pump 310 is installed acts as a pumping space blocked from an external environment.

This pump cover 320 may be embodied as a casing with an open bottom that covers and closes an open top face of the condensed water collector 230.

That is, the pump cover 320 may allow the inside of the condensed water collector 230 to act as a closed space from the outside. Accordingly, a pumping operation of the discharge pump 310 may be stably performed.

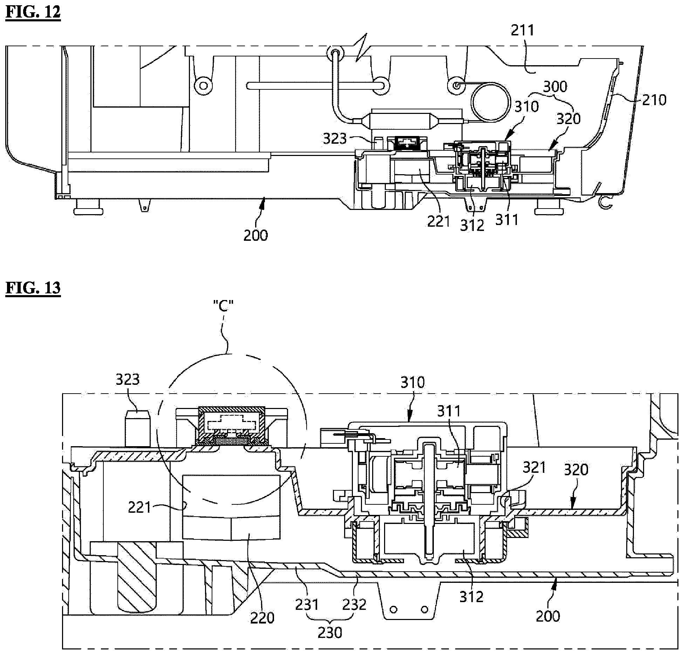

In this connection, the pump cover 320 may have an installation hole 321 extending therethrough. The discharge pump 310 may include an impeller 312 located inside the condensed water collector 230 relative to the installation hole 321 of the pump cover 320, and a discharge motor 311 installed outside the condensed water collector 230 relative to the installation hole 321 of the pump cover 320. This is as shown in the attached FIG. 13.

Further, an ejection port 322 that guides ejection flow of the condensed water pumped by the operation of the discharge pump 310 is formed to protrude upward from the pump cover 320. A pumping guide hose (not shown) is connected to the ejection port 322, such that the condensed water pumped by the discharge pump 310 is guided by the pumping guide hose and then passes through a flow guide valve 640 (see attached FIG. 6) and is stored in the container 160.

Further, the water-level sensor 326 may be installed on the pump cover 320. In this connection, the water-level sensor 326 senses the water-level in the condensed water collector 230 and provides the same to the controller 170. The discharge pump 310 may be controlled to operate based on the water-level in the condensed water collector 230 sensed by the water-level sensor 326.

In addition, a collection port 323 for collection flow of the condensed water overflowing from the water discharge container 160 may be further formed on the pump cover 320.

This collection port 323 is configured to communicate with the through-hole (the condensed water inlet side) of the condensed water collector 230. Thus, the condensed water collected from the water discharge container 160 through the corresponding collection port 323 and the condensed water flowing down the cover seated groove 220 of the base frame 200 and flowing into the condensed water collector 230 may meet each other at the same location, and then may inflow toward the discharge pump 310. In this connection, the collection port 323 may be constructed to be connected to the water discharge container 160 via a collection channel (not shown).

Next, the heat pump system is illustrated with reference to the attached FIG. 2.

The heat pump system is configured to produce high temperature dry air via heat exchange of the humid air discharged from the drum 110.

That is, the air to be supplied into the drum 110 may always have a high temperature and dry state due to the heat pump system.

This heat pump system may include the compressor 410, the condenser 420, an expander 430, and an evaporator 440.

In this connection, the compressor 410 is a device that receives high-temperature, and low-pressure refrigerant for heat exchange and compresses the refrigerant into high-temperature, and high-pressure refrigerant. The condenser 420 is a device that receives the high temperature and high pressure refrigerant and condenses the refrigerant into low temperature and high pressure refrigerant. The expander 430 is a device that receives the condensed low temperature and high pressure refrigerant and expands the refrigerant into low temperature low pressure refrigerant. The evaporator 440 is a device that receives the low-temperature and low-pressure refrigerant and heat-exchanges between the refrigerants and surrounding air. In this connection, the refrigerant passing through the evaporator 440 is in a high temperature and low pressure state. The high temperature and low pressure refrigerant may be fed to the compressor 410. This process may be repeated.

In the laundry treatment apparatus according to the present disclosure, the compressor 410 and the expander 430 are located on one side of the top face of the base frame 200 (see attached FIG. 4). The condenser 420 and evaporator 440 may be positioned within the circulation channel 210 (see attached FIGS. 6 and 7 and 10).

In this connection, the evaporator 440 is disposed on a humid air inflow side of the circulation channel 210, and performs a function of removing moisture therefrom by heat-exchanging the air with the low-temperature and low-pressure refrigerant. The condenser 420 is disposed on an air outflow side of the evaporator 440 and increase a temperature of dry air whose temperature is lowered while passing through the evaporator 440.

In another example, when considering that the compressor 410 generates a large amount of heat during its operation, the compressor 410 may be disposed adjacent to a heat-dissipation fan 411 for heat dissipation from the compressor 410. That is, the heat-dissipation fan 411 may perform the heat dissipation from the compressor 410.

The compressor 410 and the expander 430 may be spaced from the circulation channel 210 so as not to affect the circulating air (air flow and temperature thereof).

Next, with reference to FIG. 4 and FIG. 6 as attached, the circulation fan assembly 500 will be described.

The circulation fan assembly 500 is configured to forcibly circulate air.

That is, air that has sequentially passed through the evaporator 440 and the condenser 420 in the circulation channel 210 under activation of the circulation fan assembly 500 may be supplied into the drum 110 through the inlet duct 212. Then, the air passing through the drum 110 may sequentially pass through the evaporator 440 and the condenser 420 in the circulation channel 210 through the outlet duct 213. This air circulation may be repeated.

The circulation fan assembly 500 may be located on the air outflow side of the condenser 420 of the circulation channel 210.

In particular, the circulation fan assembly 500 may include a circulation fan 520 installed to be accommodated in a fan housing 510 and a fan motor 530 that drives the circulation fan 520. In this connection, an air inlet of the fan housing 510 may be connected to the circulation channel 210, and an air outlet of the fan housing 510 may be connected to the inlet duct 212.

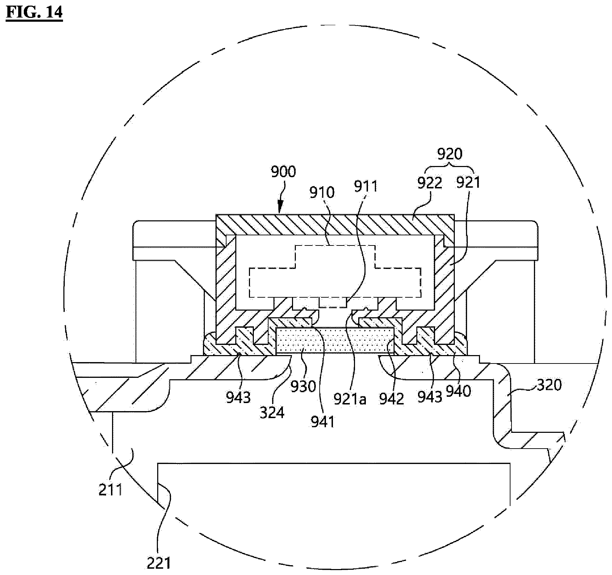

Next, the sterilization module 900 is illustrated with reference to FIGS. 14 to 18 as attached.

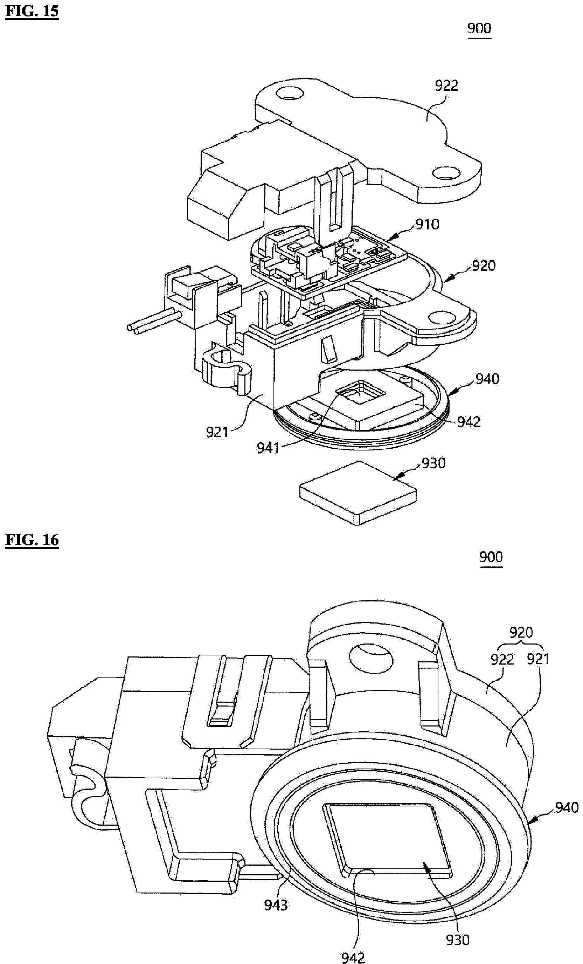

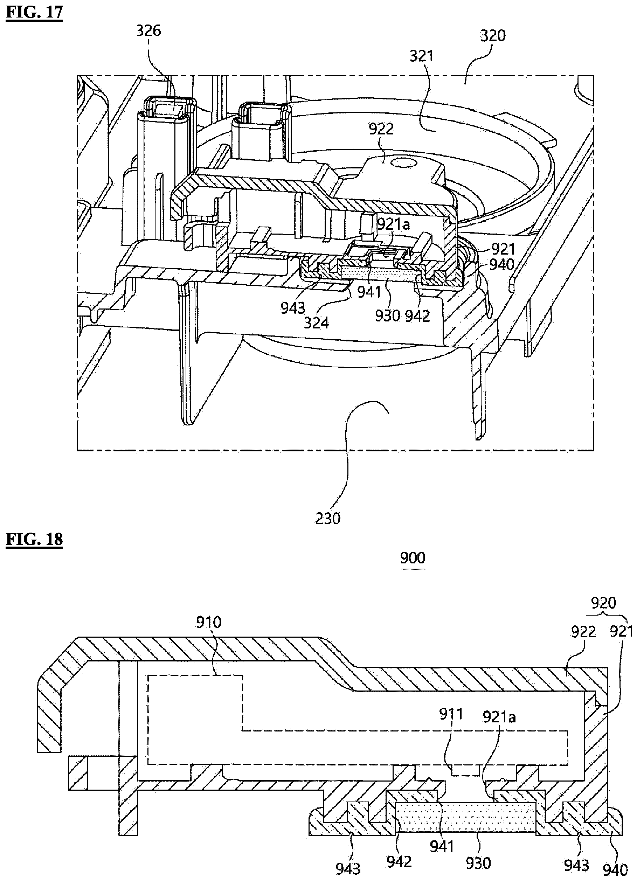

In this connection, FIG. 14 is an enlarged view showing an installation state of the discharge pump assembly and the sterilization module. FIG. 15 is an exploded perspective view showing a structure of a sterilization module of a laundry treatment apparatus according to an embodiment of the present disclosure. FIG. 16 is a bottom perspective view to illustrate a structure of the sterilization module of the laundry treatment apparatus according to an embodiment of the present disclosure. FIG. 17 is a perspective view of a state in which main components are partially cut away to illustrate an installation state of the sterilization module of the laundry treatment apparatus according to an embodiment of the present disclosure. FIG. 18 is a cross-sectional view showing a structure of the sterilization module of a laundry treatment apparatus according to an embodiment of the present disclosure.

The sterilization module 900 is configured to sterilize the condensed water in the condensed water collector 230.

This sterilization module 900 may be installed on the pump cover 320 constituting the discharge pump assembly 300.

The pump cover 320 may have a light-transmitting hole 324 passing through the pump cover 320. The sterilization module 900 may be configured to irradiate the sterilization light into the condensed water collector 230 through the light-transmitting hole 324.

In this connection, the light-transmitting hole 324 may pass through the top face of the pump cover 320. The sterilization module 900 may be installed on an outer face of the top of the pump cover 320 and at a location where the light-transmitting hole 324 is located. The position of the light-transmitting hole 324 and the installation position of the sterilization module 900 may be selected such that the pump cover 320 may be easily combined with or separated from the sterilization module 900, thereby to facilitate maintenance thereof.

In particular, the light-transmitting hole 324 may be preferably formed to be located at a portion of a top of the pump cover 320 where condensed water flows into the condensed water collector 230. In other words, the sterilization light irradiated from the sterilization module 900 may be irritated to the condensed water while the condensed water is flowing into the condensed water collector 230.

In another example, the light-transmitting hole 324 may be formed in a portion of the condensed water collector 230 where the condensed water remains. However, while an area where the condensed water remains as described above is substantially wide, the sterilization light irradiated from the sterilization module 900 has an irradiating angle sized such that the light may be irradiated only toward a portion of the condensed water. When the light-transmitting hole 324 may be formed in a portion of the condensed water collector 230 where the condensed water remains, the sterilization effect may be degraded.

Thus, it would be most desirable such that the sterilization light is irradiated toward a portion where the condensed water is flowing into the condensed water collector 230 as in the above-described embodiment.

In one example, the sterilization light irradiated from the sterilization module 900 is short-wavelength ultraviolet-ray with excellent sterilization ability. In other words, providing the short-wavelength ultraviolet-ray (UV-C) having a wavelength of 100 to 280 nm as a sterilization light may achieve excellent sterilization power.

To this end, the sterilization module 900 according to an embodiment of the present disclosure includes the circuit board 910 on which a short-wavelength ultraviolet-ray irradiation LED (Light Emitting Diode) (hereinafter referred to as "irradiation LED") 911 is mounted. In addition, the sterilization module 900 may include a casing 920 for stable installation of the circuit board 910 and protection from the external environment, a transmissive window 930 and a sealing member 940.

The components of the sterilization module 900 are described in more detail as follows.

The casing 920 is configured to provide an installation space for the circuit board 910.

The casing 920 may include a casing body 921 with a closed bottom face and an open top face, and a top face cover 922 covering the open top face of the casing body 921. In this connection, the circuit board 910 may be installed inside the casing body 921. In other words, the casing body 921 is constructed such that an inner space thereof is open so that the circuit board 910 located therein may be subject to maintenance.

In particular, the casing 920 is constructed to be fastened to the top face of the pump cover 320 with screws or bolts. This makes it easy to separate or combine the sterilization module 900 from the pump cover 320.

In addition, an irradiation hole 921a communicating with the light-transmitting hole 324 of the pump cover 320 may be defined in a bottom face of the casing body 921 that constitutes the casing 920. The irradiation LED 911 of the circuit board 910 may be installed to irradiate the short-wavelength ultraviolet-ray through the irradiation hole 921a.

In addition, the short-wavelength ultraviolet-ray irradiated from the irradiation LED 911 may transmit through the transmissive window 930. To this end, the transmissive window 930 may be made of quartz.

In addition, the sealing member 940 may prevent the condensed water in the condensed water collector 230 from invading the circuit board 910 and may allow the transmissive window 930 to be coupled to the casing 920.

This sealing member 940 may be made of a silicon material, so that the sealing member may maintain airtightness while being in close contact with the pump cover 320. This is to prevent the condensed water from inflowing through the light-transmitting hole 324.

Further, the sealing member 940 may have a circular ring structure in which a communication-hole 941 is formed in an inner central portion. In another example, although not shown, the sealing member 940 may be formed in a square frame structure having the communication-hole 941 in a center region thereof. However, in order to increase a contact area to increase the airtightness, it would be more desirable to form the sealing member 940 in the circular ring structure.

In this connection, the communication-hole 941 is formed in the central portion of the sealing member 940 and communicate the irradiation hole 921a of the casing 920 and the light-transmitting hole 324 of the pump cover 320 with each other. The transmissive window 930 may be installed to cover the communication-hole 941.

In particular, a recess 942 is formed in a bottom face of the sealing member 940 and around the communication-hole 941. The transmissive window 930 may be fixedly inserted in the recess 942.

In this connection, a recess depth of the recess 942 may be larger than a thickness of the transmissive window 930. As a result, when the sealing member 940 comes into contact with a surface of the pump cover 320, the sealing member may be compressed and deformed so that the sealing member may be adhered thereto as closely as possible.

Further, at least one circular concave-convex pattern 943 may be further formed in the bottom face of the sealing member 940 and between a circumference of the sealing member 940 and a portion thereof where the recess 942 is formed. In this connection, the circular concave-convex pattern 943 may be embodied as a groove recessed from the surface of the sealing member 940. This circular concave-convex pattern 943 may prevent the moisture existing outside the sealing member 940 from invading the transmissive window 930 in the recess 942 as much as possible. In another example, the circular concave-convex pattern 943 may be embodied as a protrusion protruding from the surface of the sealing member 940.

In one example, a reference numeral 600 in the attached FIG. 2 as not described refers to a cleaner for cleaning of a surface of the evaporator 440.

Hereinafter, the drying operation and the sterilization operation of the laundry treatment apparatus according to the embodiment of the present disclosure described above will be described in more detail.

In this connection, control of each of the components or the sensor and the valve related to each operation is performed by the controller 170 based on information as preprogrammed or in a set sequence. Hereinafter, although the description that the control of each of the components or the sensor and the valve related to each operation is performed by the controller 170 is absent, the control of each of the components or the sensor and the valve related to each operation is performed by the controller 170.

First, the drying operation is configured for drying the drying target.

This drying operation may be performed via user manipulation. That is, when the drying operation is selected via the user's manipulation, the controller 170 may control the operations of the heat pump system and the circulation fan assembly 500 to perform the drying operation.

That is, the flow of the refrigerant circulating through the heat pump system under the operation of the compressor 410 and the circulating flow of air passing through the evaporator 440 and the condenser 420 sequentially under the operation of the circulation fan assembly 500 may allow the moisture contained in the air to be removed, and then allow the dry air in a high temperature state to be supplied into the drum 110 to dry the drying target.

In this connection, the humid air discharged from the drum 110 flows into the circulation channel 210 through the outlet duct 213, and then passes through the evaporator 440 located in the circulation channel 210 such that the moisture is removed therefrom and then passes through the condenser 420 such that the dry air is heated. Then, the air passes through the fan housing 510 of the circulation fan assembly 500 and flows to the inlet duct 212, and then is supplied into the drum 110. This circulation process may be repeated.

Further, while the humid air passes through the evaporator 440 during the above-described air circulation process, the moisture contained in the air may condense on the surface (a surface of each heat exchange fin) of the evaporator 440 and may flow down along the surface and may drop onto the water cover 180 and then may be collected in the cover seated groove 220.

Then, the condensed water collected in the cover seated groove 220 may flow to a rear portion of the cover seated groove 220 along a slope of the bottom face of the cover seated groove 220 and may be stored in the condensed water collector 230 through the through-hole 221.

In particular, when the above drying operation is performed, the sterilization module 900 is powered on such that the irradiation LED 911 emits light. Thus, the short-wavelength ultraviolet-ray therefrom may be irradiated toward the condensed water flowing into the condensed water collector 230 through the through-hole 221.

In this connection, the short-wavelength ultraviolet-ray may sequentially pass through the irradiation hole 921a of the casing 920 constituting the sterilization module 900, the transmissive window 930, and the light-transmitting hole 324 of the pump cover 320, and may be irradiated toward the condensed water flowing into the condensed water collector 230 through the through-hole 221.

Thus, the condensed water flowing into the condensed water collector 230 may be sterilized by the short-wavelength ultraviolet-ray and then may be stored in the condensed water collector 230.

In one example, when the condensed water flows into the condensed water collector 230, the water-level sensor 326 disposed in the condensed water collector 230 detects the water-level of the condensed water stored in the condensed water collector 230. Then, based on the detected water-level, the controller 170 may determine whether to drain the residual water in the condensed water collector 230 to the water discharge container 160.

When the controller 170 determines to drain the residual water in the condensed water collector 230 to the water discharge container 160, the condensed water in the condensed water collector 230 may be pumped and stored to the water discharge container 160 under the operations of the discharge pump 310 and the flow guide valve 640.

Further, when an amount of the condensed water pumped and stored into the water discharge container 160 exceeds an allowable storage amount of the water discharge container 160, the condensed water may overflow from the water discharge container 160, and then the condensed water overflowing from the water discharge container 160 may pass through the collection port 323 of the pump cover 320 along a collection channel (not shown) and then be collected into the condensed water collector 230.

The condensed water collected in this process may join the condensed water that flows into the condensed water collector 230 through the through-hole 221, or the condensed water collected in this process alone may flow into a condensed water inflow side of the condensed water collector 230. Subsequently, the condensed water may be sterilized under the influence of the short-wavelength ultraviolet-ray irradiated from the sterilization module 900 to the condensed water inlet side of the condensed water collector 230 and may be stored in the condensed water collector 230.

Eventually, as the irradiation LED 911 of the above-described sterilization module 900 continuously irradiates the short-wavelength ultraviolet-ray to the condensed water flowing into the condensed water collector 230, the contamination of the condensed water stored in the condensed water collector 230 may be prevented or delayed as much as possible.

In one example, the sterilization module 900 is not limited to irradiating the short-wavelength ultraviolet-rays only during the drying operation.

In other words, when considering that as the short-wavelength ultraviolet-ray is irradiated from the sterilization module 900 for a longer time, better sterilization power may be acquired, the sterilization module 900 may be controlled to continuously irradiate the short-wavelength ultraviolet-rays before or after the drying operation is performed.

In particular, at the end of the drying operation when the heat pump system and the circulation fan assembly 500 are deactivated, the discharge pump assembly 300 and the sterilization module 900 may be activated to further perform the sterilization operation for sterilizing the condensed water for a certain period of time.

In other words, when considering the irradiating angle of the short-wavelength ultraviolet-ray irradiated from the sterilization module 900, the sterilization module 900 may not evenly irradiate the short-wavelength ultraviolet-ray to an entire region of the condensed water collector 230. Thus, there is a concern that bacteria present in the condensed water in an area to which the short-wavelength ultraviolet-ray is not irradiated may breed. Thus, it would be desirable to further increase the sterilization power for the condensed water by allowing the condensed water in the condensed water collector 230 to be continuously mixed with each other during the operation of the sterilization module 900.

In another example, when the condensed water stored in the condensed water collector 230 has a water-level at which the condensed water may be completely pumped under the operation of the discharge pump 310, the condensed water may be pumped and discharged under the operation of the discharge pump 310, and may flow into the condensed water collector 230. Thus, the condensed water may be sterilized during this circulation. Further, when the condensed water stored in the condensed water collector 230 has a water-level at which the condensed water may not be completely pumped under the operation of the discharge pump 310, the condensed water may flow in the condensed water collector due to a wind resulting from a rotational motion of the impeller of the discharge pump 310. Thus, the condensed water present in a blind spot of the condensed water collector 230 to which the short-wavelength ultraviolet-ray is not irradiated may flow to a region to which the short-wavelength ultraviolet-ray is irradiated and thus may be sufficiently subject to the short-wavelength ultraviolet-ray.

When pumping the condensed water in the condensed water collector 230 under the operation of the discharge pump assembly 300, the flow guide valve 640 may be controlled.

That is, under the control of the flow guide valve 640, the condensed water is not pumped to the water discharge container 160 but flows through the cleaner 600 to the cover seated groove 220 and then flows along the cover seated groove 220 and is collected again into the condensed water collector 230. Alternatively, under the control of the flow guide valve 640, the condensed water is pumped to the water discharge container 160 and is collected into the condensed water collector 230 through the collection channel and the collection port 323.

Further, during the operation of the sterilization operation as described above, the discharge pump assembly 300 may be controlled such that the discharge pump assembly 300 may be activated and deactivated in a repeated manner.

In other words, the repetitive activation and deactivation of the discharge pump 310 may allow the condensed water present in various portions of the condensed water collector 230 not to be kept in a stagnant state, but to flow and to be mixed with each other and be sterilized to improve the sterilization effect.

In this connection, the discharge pump assembly 300 is preferably controlled so that the operation time duration thereof is shorter than the operation stop time duration. That is, the pumping operation is performed only for a short period of time so that power consumption may be reduced, while the condensed water in the condensed water collector 230 may be smoothly mixed with each other.

Therefore, even when the condensed water remains in the condensed water collector 230, the remaining condensed water is brought into a sterilized state by the above-described series of processes using the sterilization module 900, so that contamination may be prevented.

The sterilization operation may be performed only under the operation of the sterilization module 900. In other words, after all operations are completed, only the sterilization module 900 is continuously or periodically (for example, for a certain period of time every day or once every few days) activated so that the contamination of the condensed water in the condensed water collector 230 may be continuously prevented.

Thus, the laundry treatment apparatus according to the present disclosure and the method for operating the apparatus may sterilize the condensed water stored in the condensed water collector 230 via the additional provision of the sterilization module 900, thereby preventing the contamination of the condensed water.

Further, the laundry treatment apparatus according to the present disclosure and the method for operating the apparatus are configured to sterilize the condensed water in the process of introducing the condensed water into the condensed water collector 230, so that condensed water contamination in the condensed water collector 230 may be prevented or delayed as much as possible.

Further, the laundry treatment apparatus according to the present disclosure and the method for operating the apparatus may execute the sterilization operation for irradiating the light continuously into the condensed water collector 230 even when the drying operation is terminated, thereby suppressing the bacterial proliferation of the condensed water remaining in the condensed water collector 230.

Further, in the laundry treatment apparatus according to the present disclosure and the method for operating the apparatus, the sterilization module 900 is interchangeably installed on the outer face of the pump cover 320 for easy assembly and disassembly and thus maintenance thereof.

Further, the laundry treatment apparatus according to the present disclosure and the method for operating the apparatus are configured so that a portion where the circuit board 910 of the sterilization module 900 is installed may maintain the airtightness from the inner space of the condensed water collector 230, and the airtightness is stably and perfectly maintained, such that the damage to the circuit board 910 due to moisture penetration may be prevented.

Further, the laundry treatment apparatus and the operation control method thereof to which the sterilization module 900 according to the embodiment of the present disclosure is applied are not limited to being implemented only with the structure of the illustrated embodiment.

For example, in a structure in which the discharge pump assembly 300 is disposed on the rear side of the base frame 200 as in KR Patent Application Publication No. 10-2010-0090087 and KR Patent Application Publication No. 10-2013-0127816, the sterilization module 900 may be installed at a location of the discharge pump assembly 300 to which the condensed water is collected. In another example, the sterilization operation using the sterilization module 900 may also be performed in the same manner as the operation of the above-described embodiment.

Thus, the laundry treatment apparatus and the operation control method thereof to which the sterilization module 900 according to the present disclosure is applied may be implemented in various forms as not shown.

## Claims

1. A laundry treatment apparatus comprising:
a water discharge container (160);
a condensed water collector (230) disposed in a cabinet (100), wherein the condensed water collector (230) has a collection space for storing therein condensed water;
a discharge pump assembly (300) installed in the condensed water collector (230) to pump the condensed water stored in the condensed water collector (230) toward the water discharge container (160);
a sterilization module (900) configured to sterilize the condensed water in the condensed water collector (230);
a heat pump system for heating air and condensing moisture from air used to dry laundry;
a circulation fan assembly (500) for circulating air; and
a controller (170) configured to control the heat pump system, the circulation fan assembly (500), the discharge pump assembly (300) and the sterilization module (900),
wherein the condensed water collector (230) is configured for storing therein condensed water flowing down from the heat pump system,
wherein the sterilization module (900) is configured for irradiating short-wavelength ultraviolet-rays to the condensed water;
**characterized in that**
the controller (170) is configured to:
activate the heat pump system and the circulation fan assembly (500) to dry the laundry, and deactivate the heat pump system and the circulation fan assembly (500);
activate the discharge pump assembly (300) and the sterilization module (900) to irradiate the short-wavelength ultraviolet-rays to the condensed water circulated under an operation of the discharge pump assembly (300).

2. The laundry treatment apparatus of claim 1, wherein the discharge pump assembly (300) includes a pump cover (320) to cover and close an opening of the top face of the condensed water collector (230), wherein a discharge pump (310) is installed inside the pump cover (320), and wherein the sterilization module (900) is installed on the pump cover (320).

3. The laundry treatment apparatus of claim 2, wherein the pump cover (320) has a light-transmitting hole (324) passing through the pump cover (320),
wherein the sterilization module (900) is configured to irradiate sterilization light to the condensed water in the condensed water collector (230) through the light-transmitting hole (324) of the pump cover (320).

4. The laundry treatment apparatus of claim 3, wherein the light-transmitting hole (324) is defined in a top face of the pump cover (320),
wherein the sterilization module (900) is disposed on an outer face of a top of the pump cover (320),
wherein optionally the light-transmitting hole (324) is defined in a location of the top face of the pump cover (320) at which the condensed water flows into the condensed water collector (230).

5. The laundry treatment apparatus of claim 4, wherein the sterilization module (900) includes a circuit board (910) having a light emission diode (LED) mounted thereon that irradiates short-wavelength ultraviolet-rays.

6. The laundry treatment apparatus of claim 5, wherein the sterilization module (900) further includes
a casing (920) having an installation space in which the circuit board (910) is installed, wherein the casing (920) has an irradiation hole (921a) defined in a bottom face thereof communicating with the light-transmitting hole (324);
a transmissive window (930) installed on the bottom face of the casing (920) to cover the irradiation hole (921a); and
a sealing member (940) for coupling the transmissive window (930) to the casing (920).

7. The laundry treatment apparatus of claim 6, wherein the sealing member (940) is constructed such a bottom face of the sealing member (940) covers a portion of the top face of the pump cover (320) where the light-transmitting hole (324) is defined, thereby preventing the condensed water from invading the light-transmitting hole (324).

8. The laundry treatment apparatus of claim 7, wherein a communication-hole (941) communicating the irradiation hole (921a) and the light-transmitting hole (324) is defined in a center of the bottom face of the sealing member (940).

9. The laundry treatment apparatus of claim 8, wherein a recess (942) is defined in the bottom face of the sealing member (940) and around the communication-hole (941), and
wherein the transmissive window (930) is fixedly inserted into the recess (942),
wherein optionally a recess depth of the recess (942) is larger than a thickness of the transmissive window (930).

10. The laundry treatment apparatus of any one of claims 6 to 9, wherein the sealing member (940) is formed in a circular ring structure having a communication-hole (941) defined in a center thereof,
wherein optionally at least one circular concave-convex pattern (943) surrounding the communication-hole (941) is formed on the bottom face of the sealing member (940).

11. The laundry treatment apparatus of any one of claims 6 to 10, wherein the casing (920) is fastened to the top face of the pump cover (320) using a screw or a bolt.

12. The laundry treatment apparatus of any one of claims 4 to 11, wherein a collection port (323) for collection of condensed water overflowing from the water discharge container (160) is formed on the top face of the pump cover (320), and
wherein the light-transmitting hole (324) is located adjacent to the collection port (323) on the top face of the pump cover (320).

13. The laundry treatment apparatus any one of claims 1 to 12, wherein the controller (170) is configured to activate the sterilization module (900) to irradiate the short-wavelength ultraviolet-ray before deactivating the heat pump system and the circulation fan assembly (500).

14. The laundry treatment apparatus any one of claims 1 to 13, wherein the controller (170) is configured to activate and deactivate the discharge pump assembly (300) in a repeated manner,
wherein optionally the controller (170) is configured to set an activation duration of the discharge pump assembly (300) to be smaller than a deactivation duration of the discharge pump assembly (300).

## Patentansprüche

1. Wäschebehandlungsvorrichtung, die aufweist:
einen Wasserabgabebehälter (160);
einen Kondenswassersammler (230), der in einem Gehäuse (100) angeordnet ist, wobei der Kondenswassersammler (230) einen Sammelraum zum Speichern von Kondenswasser darin aufweist;
eine Abgabepumpenanordnung (300), die in dem Kondenswassersammler (230) installiert ist, um das in dem Kondenswassersammler (230) gespeicherte Kondenswasser zum Wasserabgabebehälter (160) zu pumpen;
ein Sterilisationsmodul (900), das konfiguriert ist, das Kondenswasser im Kondenswassersammler (230) zu sterilisieren;
ein Wärmepumpensystem zum Erwärmen von Luft und zum Kondensieren von Feuchtigkeit aus Luft, die zum Trocknen von Wäsche verwendet wird;
eine Umwälzungsgebläseanordnung (500) zum Umwälzen von Luft; und
eine Steuerung (170), die konfiguriert ist, das Wärmepumpensystem, die Umwälzungsgebläseanordnung (500), die Abgabepumpenanordnung (300) und das Sterilisationsmodul (900) zu steuern, wobei der Kondenswassersammler (230) konfiguriert ist, darin Kondenswasser zu speichern, das von dem Wärmepumpensystem nach unten fließt,
wobei das Sterilisationsmodul (900) zum Abstrahlen von kurzwelliger ultravioletter Strahlen auf das Kondenswasser konfiguriert ist;
**dadurch gekennzeichnet, dass**
die Steuerung (170) konfiguriert ist, um:
das Wärmepumpensystem und die Umwälzungsgebläseanordnung (500) zu aktivieren, um die Wäsche zu trocknen, und das Wärmepumpensystem und die Umwälzungsgebläseanordnung (500) zu deaktivieren;
die Abgabepumpenanordnung (300) und das Sterilisationsmodul (900) zu aktivieren, um die kurzwelligen ultravioletten Strahlen auf das Kondenswasser zu strahlen, das im Betrieb der Abgabepumpenanordnung (300) umgewälzt wird.

2. Wäschebehandlungsvorrichtung nach Anspruch 1, wobei die Abgabepumpenanordnung (300) eine Pumpenabdeckung (320) zum Abdecken und Verschließen einer Öffnung an der Oberseite des Kondenswassersammlers (230) aufweist, wobei eine Abgabepumpe (310) in der Pumpenabdeckung (320) installiert ist und
wobei das Sterilisationsmodul (900) an der Pumpenabdeckung (320) installiert ist.

3. Wäschebehandlungsvorrichtung nach Anspruch 2, wobei die Pumpenabdeckung (320) eine Lichtdurchlassöffnung (324) aufweist, die durch die Pumpenabdeckung (320) geht, wobei das Sterilisationsmodul (900) konfiguriert ist, Sterilisationslicht durch die Lichtdurchlassöffnung (324) der Pumpenabdeckung (320) auf das Kondenswasser im Kondenswassersammler (230) zu strahlen.

4. Wäschebehandlungsvorrichtung nach Anspruch 3, wobei die Lichtdurchlassöffnung (324) in einer Oberseite der Pumpenabdeckung (320) definiert ist,
wobei das Sterilisationsmodul (900) an einer Außenseite einer Oberseite der Pumpenabdeckung (320) angeordnet ist,
wobei optional die Lichtdurchlassöffnung (324) an einer Stelle der Oberseite der Pumpenabdeckung (320) definiert ist, an der das Kondenswasser in den Kondenswassersammler (230) fließt.

5. Wäschebehandlungsvorrichtung nach Anspruch 4, wobei das Sterilisationsmodul (900) eine Leiterplatte (910) mit einer darauf montierten Leuchtdiode (LED) aufweist, die kurzwellige ultraviolette Strahlen abstrahlt.

6. Wäschebehandlungsvorrichtung nach Anspruch 5, wobei das Sterilisationsmodul (900) ferner aufweist:
ein Gehäuse (920) mit einem Installationsraum, in dem die Leiterplatte (910) installiert ist, wobei das Gehäuse (920) eine Bestrahlungsöffnung (921a) aufweist, die in einer Unterseite desselben definiert ist und mit der Lichtdurchlassöffnung (324) in Verbindung steht;
ein lichtdurchlässiges Fenster (930), das an der Unterseite des Gehäuses (920) angebracht ist, um das Bestrahlungsöffnung (921a) abzudecken; und
ein Dichtungselement (940) zur Kopplung des lichtdurchlässigen Fenster (930) mit dem Gehäuse (920).

7. Wäschebehandlungsvorrichtung nach Anspruch 6, wobei das Dichtungselement (940) so konstruiert ist, dass eine Unterseite des Dichtungselements (940) einen Abschnitt der Oberseite der Pumpenabdeckung (320) bedeckt, wo die Lichtdurchlassöffnung (324) definiert ist, wodurch verhindert wird, dass Kondenswasser in die Lichtdurchlassöffnung (324) eindringt.

8. Wäschebehandlungsvorrichtung nach Anspruch 7, wobei eine Verbindungsöffnung (941), die die Bestrahlungsöffnung (921a) und die Lichtdurchlassöffnung (324) verbindet, in einer Mitte der Unterseite des Dichtungselements (940) definiert ist.

9. Wäschebehandlungsvorrichtung nach Anspruch 8, wobei eine Aussparung (942) in der Bodenfläche des Dichtungselements (940) und um das Verbindungsöffnung (941) definiert ist, und
wobei das lichtdurchlässige Fenster (930) fest in die Aussparung (942) eingesetzt ist,
wobei optional eine Tiefe der Aussparung (942) größer ist als eine Dicke des lichtdurchlässigen Fensters (930).

10. Wäschebehandlungsvorrichtung nach einem der Ansprüche 6 bis 9, wobei das Dichtungselement (940) in einer kreisförmigen Ringstruktur mit einer in ihrer Mitte definierten Verbindungsöffnung (941) ausgebildet ist,
wobei optional mindestens ein kreisförmiges konkav-konvexes Muster (943), das die Verbindungsöffnung (941) umgibt, auf der Unterseite des Dichtungselements (940) ausgebildet ist.

11. Wäschebehandlungsvorrichtung nach einem der Ansprüche 6 bis 10, wobei das Gehäuse (920) an der Oberseite der Pumpenabdeckung (320) unter Verwendung einer Schraube oder eines Bolzens befestigt ist.

12. Wäschebehandlungsvorrichtung nach einem der Ansprüche 4 bis 11, wobei eine Sammelöffnung (323) zum Sammeln von Kondenswasser, das aus dem Wasserabgabebehälter (160) überläuft, an der Oberseite der Pumpenabdeckung (320) ausgebildet ist, und
wobei die Lichtdurchlassöffnung (324) benachbart zur Sammelöffnung (323) auf der Oberseite der Pumpenabdeckung (320) angeordnet ist.

13. Wäschebehandlungsvorrichtung nach einem der Ansprüche 1 bis 12, wobei die Steuerung (170) konfiguriert ist, das Sterilisationsmodul (900) zu aktivieren, um die kurzwellige Ultraviolettstrahlung abzustrahlen, bevor sie das Wärmepumpensystem und die Umwälzungsgebläseanordnung (500) deaktiviert.

14. Wäschebehandlungsvorrichtung nach einem der Ansprüche 1 bis 13, wobei die Steuerung (170) konfiguriert ist, die Abgabepumpenanordnung (300) wiederholt zu aktivieren und zu deaktivieren,
wobei die Steuerung (170) optional konfiguriert ist, eine Aktivierungsdauer der Abgabepumpenanordnung (300) so einzustellen, dass sie kürzer ist als eine Deaktivierungsdauer der Abgabepumpenanordnung (300).

## Revendications

1. Machine à traiter le linge, comprenant :
un bac de refoulement d'eau (160) ;
un collecteur d'eau de condensation (230) disposé dans une carrosserie (100), ledit collecteur d'eau de condensation (230) ayant un espace de collecte pour le stockage d'eau de condensation ;
un ensemble de pompe de refoulement (300) installé dans le collecteur d'eau de condensation (230) pour refouler l'eau de condensation stockée dans le collecteur d'eau de condensation (230) vers le bac de refoulement d'eau (160) ;
un module de stérilisation (900) prévu pour stériliser l'eau de condensation dans le collecteur d'eau de condensation (230) ;
un système de pompe à chaleur pour chauffer l'air et condenser l'humidité de l'air utilisé pour sécher le linge ;
un ensemble de ventilateur de circulation (500) pour recycler l'air ; et
un contrôleur (170) prévu pour commander le système de pompe à chaleur, l'ensemble de ventilateur de circulation (500), la pompe de refoulement (300) et le module de stérilisation (900),
où le collecteur d'eau de condensation (230) est prévu pour stocker l'eau de condensation s'écoulant du système de pompe à chaleur,
où le module de stérilisation (900) est prévu pour irradier l'eau de condensation avec des rayons ultraviolets de courte longueur d'onde ;
**caractérisée en ce que**
le contrôleur (170) est prévu pour :
activer le système de pompe à chaleur et l'ensemble de ventilateur de circulation (500) pour sécher le linge, et désactiver le système de pompe à chaleur et l'ensemble de ventilateur de circulation (500) ;
activer l'ensemble de pompe de refoulement (300) et le module de stérilisation (900) pour irradier avec des rayons ultraviolets de courte longueur d'onde l'eau de condensation recyclée sous l'action de l'ensemble de pompe de refoulement (300).

2. Machine à traiter le linge selon la revendication 1, où l'ensemble de pompe de refoulement (300) comprend un couvercle de pompe (320) pour couvrir et fermer une ouverture de la face supérieure du collecteur d'eau de condensation (230), où une pompe de refoulement (310) est installée à l'intérieur du couvercle de pompe (320), et
où le module de stérilisation (900) est installé sur le couvercle de pompe (320).

3. Machine à traiter le linge selon la revendication 2, où le couvercle de pompe (320) présente un trou de transmission de lumière (324) traversant le couvercle de pompe (320), le module de stérilisation (900) est prévu pour irradier par une lumière de stérilisation l'eau de condensation dans le collecteur d'eau de condensation (230) à travers le trou de transmission de lumière (324) du couvercle de pompe (320).

4. Machine à traiter le linge selon la revendication 3, où le trou de transmission de lumière (324) est défini dans une face supérieure du couvercle de pompe (320),
le module de stérilisation (900) est disposé sur une face extérieure du sommet du couvercle de pompe (320),
le trou de transmission de lumière (324) est facultativement défini à un emplacement de la face supérieure du couvercle de pompe (320) où l'eau de condensation s'écoule dans le collecteur d'eau de condensation (230).

5. Machine à traiter le linge selon la revendication 4, où le module de stérilisation (900) comprend une carte de circuit imprimé (910) sur laquelle est montée une diode électroluminescente (LED) émettant des rayons ultraviolets de courte longueur d'onde.

6. Machine à traiter le linge selon la revendication 5, où le module de stérilisation (900) comprend en outre :
un boîtier (920) ayant un espace d'installation où est montée la carte de circuit imprimé (910), ledit boîtier (920) ayant un trou d'irradiation (921a) défini sur sa face inférieure et communiquant avec le trou de transmission de lumière (324) ;
une fenêtre de transmission (930) installée sur la face inférieure du boîtier (920) de manière à couvrir le trou d'irradiation (921a) ; et
un élément d'étanchéité (940) pour raccorder la fenêtre de transmission (930) au boîtier (920).

7. Machine à traiter le linge selon la revendication 6, où l'élément d'étanchéité (940) est conçu de sorte qu'une face inférieure dudit élément d'étanchéité (940) couvre une partie de la face supérieure du couvercle de pompe (320) où est défini le trou de transmission de lumière (324), empêchant ainsi l'eau de condensation de pénétrer dans le trou de transmission de lumière (324).

8. Machine à traiter le linge selon la revendication 7, où un trou de communication (941) communiquant avec le trou d'irradiation (921a) et le trou de transmission de lumière (324) est défini au centre de la face inférieure de l'élément d'étanchéité (940).

9. Machine à traiter le linge selon la revendication 8, où un renfoncement (942) est défini dans la face inférieure de l'élément d'étanchéité (940) et autour du trou de communication (941), et
où la fenêtre de transmission (930) est insérée de manière fixe dans le renfoncement (942), où, facultativement, la profondeur du renfoncement (942) est supérieure à l'épaisseur de la fenêtre de transmission (930).

10. Machine à traiter le linge selon l'une des revendications 6 à 9, où l'élément d'étanchéité (940) est formé avec une structure en anneau circulaire ayant un trou de communication (941) défini au centre de celui-ci,
où, facultativement, au moins un motif circulaire concave-convexe (943) entourant le trou de communication (941) est formé sur la face inférieure de l'élément d'étanchéité (940).

11. Machine à traiter le linge selon l'une des revendications 6 à 10, où le boîtier (920) est fixé sur la face supérieure du couvercle de pompe (320) au moyen d'une vis ou d'un boulon.

12. Machine à traiter le linge selon l'une des revendications 4 à 11, où un orifice de collecte (323) pour recueillir l'eau de condensation débordant du bac de refoulement d'eau (160) est formé sur la face supérieure du couvercle de pompe (320), et
où le trou de transmission de lumière (324) est adjacent à l'orifice de collecte (323) sur la face supérieure du couvercle de pompe (320).

13. Machine à traiter le linge selon l'une des revendications 1 à 12, où le contrôleur (170) est prévu pour activer le module de stérilisation (900) afin d'irradier les rayons ultraviolets à courte longueur d'onde avant de désactiver le système de pompe à chaleur et l'ensemble de ventilateur de circulation (500).

14. Machine à traiter le linge selon l'une des revendications 1 à 13, où le contrôleur (170) est prévu pour activer et désactiver l'ensemble de pompe de refoulement (300) de manière répétée,
où, facultativement, le contrôleur (170) est prévu pour régler une durée d'activation de l'ensemble de pompe de refoulement (300) afin que celle-ci soit inférieure à une durée de désactivation de l'ensemble de pompe de refoulement (300).
